# EUROPÄISCHE PATENTSCHRIFT

(11) **EP 3 241 081 B1**
(45) Veröffentlichungstag und Bekanntmachung des Hinweises auf die Patenterteilung: **25.08.2021**
(21) Anmeldenummer: 15819821.8
(22) Anmeldetag: 22.12.2015
(51) Int. Cl.: G05B 19/404, B23Q 15/18

(54) **VERFAHREN ZUR KOMPENSATION EINER ABWEICHUNG EINES ARBEITSPUNKTS**
METHOD FOR COMPENSATING FOR A DEVIATION OF AN OPERATING POINT
PROCÉDÉ DE COMPENSATION D'UN ÉCART D'UN POINT DE FONCTIONNEMENT

(30) Priorität: 29.12.2014 DE 102014119654
(43) Veröffentlichungstag der Anmeldung: 08.11.2017
(73) Patentinhaber: Broetje-Automation GmbH, 26180 Rastede (DE)
(72) Erfinder: STOYKE, Markus, 26169 Friesoythe (DE)
(74) Vertreter: Gottschald, Jan
(86) Internationale Anmeldenummer: PCT/EP2015/080945
(87) Internationale Veröffentlichungsnummer: WO 2016/107787

(56) Entgegenhaltungen:
- DE-A1- 19 821 873
- DE-A1-102010 003 303
- DE-A1-102011 011 542
- US-A- 5 903 459

## Beschreibung

Die Erfindung betrifft ein Verfahren zur Kompensation einer Abweichung eines Arbeitspunkts eines Manipulators gemäß dem Oberbegriff von Anspruch 1.

Bei der Bearbeitung von Werkstücken durch einen Endeffektor an einem Manipulator besteht regelmäßig das Erfordernis, den Manipulator während des Bearbeitungsprozesses in seinem Arbeitspunkt - welcher auch als Tool-Center-Point (TCP) bezeichnet werden kann - fortlaufend zu bewegen und somit zu positionieren. Insbesondere wenn es sich bei dem Manipulator um einen Mehrachsroboter handelt, basiert die Ansteuerung des Manipulators auf in einer NC-Steuerung durchgeführten Berechnungen, zu denen eine Bahnplanung und eine Interpolation zählen, gemäß derer dann die entsprechenden Ansteuerungen z. B. der Achsen des Mehrachsroboters stattfinden.

Die von der NC-Steuerung durchgeführten Berechnungen gehen dabei von verschiedenen physikalischen Parametern des Manipulators, z. B. Längen, Gewichten sowie anderen für die Berechnungen relevanten Größen aus. Dabei sind diese Parameter in der Praxis aber nicht ideal konstant, sondern können sich, beispielsweise in Abhängigkeit von der aktuell herrschenden Temperatur, verändern. Werden diese Veränderungen bei der Ansteuerung des Manipulators nicht berücksichtigt, so ergibt sich eine Abweichung zwischen der Ist-Position des Arbeitspunkts des Manipulators und der Soll-Position des Arbeitspunkts des Manipulators gemäß der Berechnung. Hier und nachfolgend ist der Begriff der "NC-Steuerung" weit zu verstehen, sodass damit auch eine Steuerung gemeint ist, welche einige oder alle Funktionalitäten einer SPS (speicherprogrammierbare Steuerung) umfasst.

Aus dem Stand der Technik und speziell aus der Offenlegungsschrift DE 10 2010 003 303 A1 sind ein Verfahren und eine Vorrichtung zum Kompensieren einer temperaturabhängigen Lageveränderung an einer Werkzeugmaschine bekannt. Eine NC-Steuerung berechnet dabei Soll-Werte für verschiedene Linearachsen der Werkzeugmaschine. Diese Soll-Werte berücksichtigen eine Temperatur-Kompensation, welche auf aktuellen Temperaturmessungen basiert und für die einzelnen Soll-Werte der jeweiligen Linearachsen einen Kompensationswert ermittelt und auf diese anwendet. Dabei sind die Kompensationswerte aber nicht nur temperaturabhängig, sondern zusätzlich auch abhängig von der Lage der Linearachsen. Es wird also berücksichtigt, dass für eine genaue Temperaturkompensation auch eine positionsabhängige Komponente berücksichtigt werden muss. Speziell um auch bei raschen Positionsänderungen zeitnah die Kompensation durchführen zu können, ist die Kompensation durch ein System von festen Koeffizienten bestimmt, welche auf die gemessenen Temperaturen und die Achspositionen gemäß der Bestimmung durch die NC-Steuerung angewandt werden.

Nachteilig an diesem Stand der Technik ist jedoch, dass sich trotz des Versuchs einer Kompensation durch eine - ob nun positionsabhängige oder positionsunabhängige - Berücksichtigung der Temperatur eine Abweichung zwischen der Soll-Position und der Ist-Position ergeben kann. Dies kann darauf zurückgehen, dass die z. B. während einer initialen, gleichsam im Labor zur Ermittlung der obigen Koeffizienten erfolgten Einmessung herrschenden Randbedingungen nicht mehr gegeben sind. So kann etwa eine spezifische Temperaturverteilung entlang einer Strecke des Manipulators vorliegen, welche auch durch mehrere verteilte Temperatursensoren nicht hinreichend unterschieden werden kann oder es können auf den Manipulator wirkende Prozesskräfte einen maßgeblichen Einfluss auf die Lage des Manipulators entwickeln. Abweichungen, welche hierin ihre Ursache haben, können bei dem Ansatz aus dem Stand der Technik nicht kompensiert werden.

Aus den Offenlegungsschriften DE 10 2010 003 303 A1, DE 10 2011 011 542 A1, DE 198 21 873 A1 und US 5 903 459 A sind diverse Verfahren zur Verbesserung der Genauigkeit bei der Positionierung und der Nutzung von Manipulatoren bekannt.

Vor diesem Hintergrund besteht die Aufgabe der Erfindung also darin, ein verbessertes Verfahren zur Kompensation einer Abweichung eines Arbeitspunkts eines Manipulators während der Bearbeitung eines Werkstücks durch einen Endeffektor an dem Manipulator bereitzustellen, welches dynamisch auf bei der Bearbeitung auftretende Abweichungseffekte durch Kompensation reagieren kann.

Das genannte Problem wird bei einem Verfahren zur Kompensation einer Abweichung eines Arbeitspunkts eines Manipulators gemäß dem Oberbegriff von Anspruch 1 durch die Merkmale des kennzeichnenden Teils von Anspruch 1 gelöst.

Wesentlich für die Erfindung ist die Erkenntnis, dass durch eine Messung der tatsächlichen Position des Arbeitspunkts während der Bearbeitung des Werkstücks - und damit nach erfolgter Kompensation - die Kompensationsparameter Wesentlich für die Erfindung ist die Erkenntnis, dass durch eine Messung der tatsächlichen Position des Arbeitspunkts während der Bearbeitung des Werkstücks - und damit nach erfolgter Kompensation - die Kompensationsparameter im Falle einer immer noch vorhandenen Abweichung dynamisch angepasst werden können, sodass sowohl a priori nicht bekannte Störgrößen als auch sich ändernde Zusammenhänge der bekannten Störgrößen berücksichtigt und kompensiert werden können. Insoweit findet also eine Rückkopplung zur Verbesserung der Kompensationsparameter zur Echtzeit statt.

Die bevorzugte Ausgestaltung des Unteranspruchs 2 betrifft dabei die Möglichkeit, diese Anpassung der Kompensationsparameter in der Taktung vorzunehmen, in welcher die NC-Steuerung die Interpolation vornimmt. Dies ermöglicht eine sehr rasche Reaktion auf auftretende Abweichungen.

Es existieren NC-Steuerungen, welche spezielle Programmier-Schnittstellen anbieten, durch die eigene Softwaremodule z. B. von Betreibern der NC-Steuerung oder Integratoren definiert in die Verarbeitung der NC-Steuerungen eingreifen können. Die Unteransprüche 3 bis 5 sehen nun vor, Schritte des vorschlagsgemäßen Verfahrens in einem Ergänzungs-Softwaremodul ablaufen zu lassen, welches über eine solche Schnittstelle mit der NC-Steuerung interagiert. Dabei kann dieses Ergänzungs-Softwaremodul durch diese Schnittstelle aufgerufen bzw. angestoßen werden und seinerseits auf Zustandsinformationen der NC-Steuerung zugreifen bzw. Aktionen der NC-Steuerung auslösen.

Eine bevorzugte Möglichkeit der Messung der Ist-Position in der laufenden Bearbeitung wird - wie durch den Unteranspruch 6 beschrieben - durch das Vorsehen eines optischen Sensors wie eines Lasertrackers geboten.

Eine zusätzliche Verfeinerung sieht der Unteranspruch 7 vor, gemäß dem die zur Kompensation verwendeten Parameter insoweit unterteilt werden, als dass nur bestimmte Parameter dynamisch angepasst werden und die übrigen Parameter konstant bleiben. Auf diese Weise ist eine genauere Abbildung der der Abweichung zugrundeliegenden physikalischen Effekte möglich.

Der Unteranspruch 8 betrifft das Messen einer Umgebungsgröße als Grundlage der Kompensation, wobei der Unteranspruch 9 dabei speziell die Berücksichtigung eines Drucks als Umgebungsgröße für die Kompensation vorsieht und dieser Druck speziell auf ein Gewichtsausgleichsystem wirken und dort gemessen werden kann. Die Unteransprüche 10 und 11 betreffen das Messen einer Ist-Temperatur als Umgebungsgröße und die Kompensation temperaturbedingter Abweichungen. Der Unteranspruch 12 sieht wiederum das Erfassen einer auf den Endeffektor wirkenden Prozesskraft zwecks Kompensation entsprechender Effekte vor.

Schließlich betreffen die Unteransprüche 13 bis 15 den Fall, dass es sich bei dem Manipulator um einen Mehrachsroboter handelt und speziell auf diese Variante zugeschnittene Ausgestaltungen.

Weitere Einzelheiten, Merkmale, Ziele und Vorteile der vorliegenden Erfindung werden nachfolgend anhand der Zeichnung lediglich eines bevorzugten Ausführungsbeispiels erläutert. In der Zeichnung zeigt
- Fig. 1: eine schematische Darstellung einer Anordnung mit einem Endeffektor an einem Manipulator zur Bearbeitung eines Werkstücks zur Ausführung des vorschlagsgemäßen Verfahrens und
- Fig. 2: eine Prinzipdarstellung der Schnittstelle zwischen einer NC-Steuerung und einem Ergänzungs-Softwaremodul zur Ausführung des vorschlagsgemäßen Verfahrens.

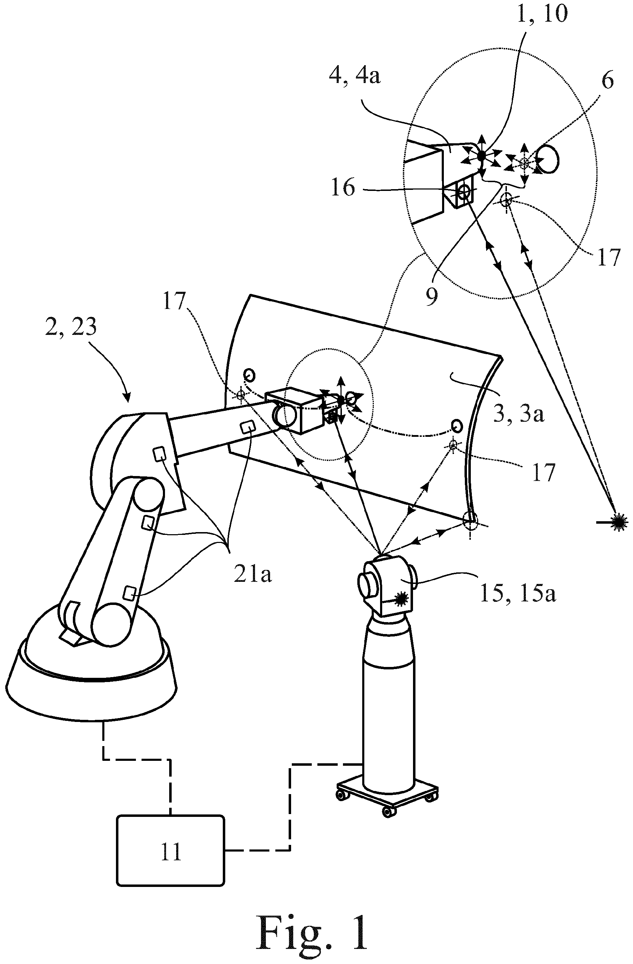

Das vorschlagsgemäße Verfahren dient der Kompensation einer Abweichung eines Arbeitspunktes 1 - auch Tool Center Point (TCP) genannt - eines Manipulators 2 während der Bearbeitung eines Werkstücks 3 durch einen Endeffektor 4 an dem Manipulator 2. Eine entsprechende Anordnung ist in der Fig. 1 dargestellt. In dem dargestellten Ausführungsbeispiel handelt es sich bei dem Endeffektor 4 um eine Schweißvorrichtung 4a und bei dem Werkstück 3 um ein Flugzeugstrukturbauteil 3a. In dem vorschlagsgemäßen Verfahren wird eine Befehlsabfolge zur Ansteuerung des Manipulators 2 zwecks Bearbeitung des Werkstücks 3 abgearbeitet. Bei dieser Befehlsabfolge kann es sich einerseits um ein NC-Programm handeln, welches aus einzelnen NC-Befehlen besteht. Es kann sich aber auch um eine Befehlsabfolge handeln, welche erst aus den NC-Befehlen des NC-Programms erstellt wurde. Dieses Erstellen kann dabei verschiedene Berechnungsschritte wie insbesondere eine Kinematiktransformation, eine Interpolationen oder eine Bahnplanung umfassen. Die Abarbeitung erfolgt regelmäßig in einer NC-Steuerung 11a, welche unten weiter beschrieben wird.

Vorschlagsgemäß wird basierend auf dieser Befehlsabfolge eine Soll-Positionsinformation 5 entsprechend einer Soll-Position 6 erzeugt. Die Soll-Position 6,welche eine Soll-Position 6 des Arbeitspunktes 1 ist, ergibt sich also aus der Befehlsabfolge, entweder direkt oder durch einen oder mehrere Berechnungsschritte wie oben beispielhaft beschrieben. Die Soll-Positionsinforiiiation 5 entspricht nun denjenigen Steuerdaten, die aus der Abarbeitung des Befehlsabfolge erzeugt wurden und mit denen der Manipulator 2 angesteuert werden soll, damit der Arbeitspunkt 1 sich an der Soll-Position 6 befindet. Sowohl der Arbeitspunkt 1 als auch die Soll-Position 6 kann hierbei neben einer reinen Positionsangabe in drei Dimensionen auch eine Ausrichtungsangabe, z. B. ebenfalls in drei Dimensionen umfassen. Nachfolgend wird zwischen diesen beiden möglichen und ggf. weiteren Komponenten des Arbeitspunkts 1 bzw. der Soll-Position 6 nicht unterschieden. Bei der Soll-Positionsinformation 5 kann es sich dementsprechend auch um eine zeitliche Abfolge oder einen Verlauf von Steuerdaten handeln, mit denen der Manipulator 2 angesteuert wird.

Vorschlagsgemäß wird also basierend auf der Soll-Positionsinformation 5 der Arbeitspunkt 1 des Manipulators 2 eingestellt wird. Es werden nun vorab durch eine Ausmessung ermittelte Zusammenhänge, welche eine Abweichung des Arbeitspunkts 1 von der Soll-Position 6 in Abhängigkeit verschiedener Randbedingungen begründen, zur Kompensation berücksichtigt. Vorschlagsgemäß ist hierzu vorgesehen, dass die Soll-Positionsinformation 5 mit einem auf die Soll-Positionsinformation 5 bezogenen Kompensationsparametersatz 7 zur Ermittlung eines Kompensationswertes 8 verarbeitet wird. Bei dieser Verarbeitung kann es sich um eine im Prinzip beliebige Rechenoperation handeln. Vorschlagsgemäß wird die Soll-Positionsinformation 5 gemäß dem Kompensationswert 8 zum Ausgleich einer Abweichung 9 zwischen einer Ist-Position 10 des Arbeitspunkts 1 und der Soll-Position 6 angepasst. Der Kompensationswert 8 soll also diese Abweichung 9 gegenüber der Situation ohne Berücksichtigung des Kompensationswertes 8 nach Möglichkeit verkleinern. Dabei kann der Kompensationswert 8 entweder ebenso wie die Soll-Positionsinformation 5 dem Manipulator 2 bereitgestellt werden, sodass diese Verarbeitung im Manipulator 2 erfolgt. Die obigen Feststellungen zu der Dimensionalität der Soll-Position gelten sinngemäß gleich auch für die Ist-Position 10. Alternativ oder zusätzlich kann das Anpassen der Soll-Positionsinformation auch in einer von dem Manipulator 2 separaten Steuervorrichtung 11 erfolgen, sodass der Manipulator 2 nur mit der in diesem Sinne angepassten Soll-Positionsinforniation 5 angesteuert wird. Bei dieser Steuervorrichtung 11 kann es sich prinzipiell um eine beliebige Datenverarbeitungsvorrichtung und insbesondere einen Computer wie einen Industrie-PC o. dgl. handeln.

Es kann hier allerdings wie oben bereits beschrieben sein, dass diese Anpassung der Soll-Positionsinformation 5 gemäß dem Kompensationswert 8 nicht ausreicht, um die Abweichung 9 vollständig aufzuheben. Regelmäßig lassen sich nämlich nicht alle während der Bearbeitung des Werkstücks 3 auftretenden Effekte, die zu der Abweichung 9 führen können, schon durch einen vorab ermittelten Kompensationsparametersatz 7 vollständig erfassen.

Das vorschlagsgemäße Verfahren ist daher dadurch gekennzeichnet, dass die Ist-Position 10 während der Bearbeitung des Werkstücks 3 gemessen wird, dass basierend auf einem Vergleich zwischen der gemessenen Ist-Position 10 und der Soll-Position 6 ein Korrekturwert 12 ermittelt wird und dass basierend auf dem Korrekturwert 12 während der Bearbeitung des Werkstücks 3 der Kompensationsparametersatz 7 zur Verringerung des Abweichung 9 angepasst wird. Auf diese Weise kann der Mechanismus zur Kompensation der Abweichung 9 noch während der Bearbeitung des Werkstücks 3 so weiter optimiert werden, dass er sogar ganz verschwinden kann. Durch die Anpassung des Kompensationsparametersatzes 7 verändert sich entsprechend auch der Kompensationswert 8, was dann zu einer Verringerung der Abweichung 9 führt.

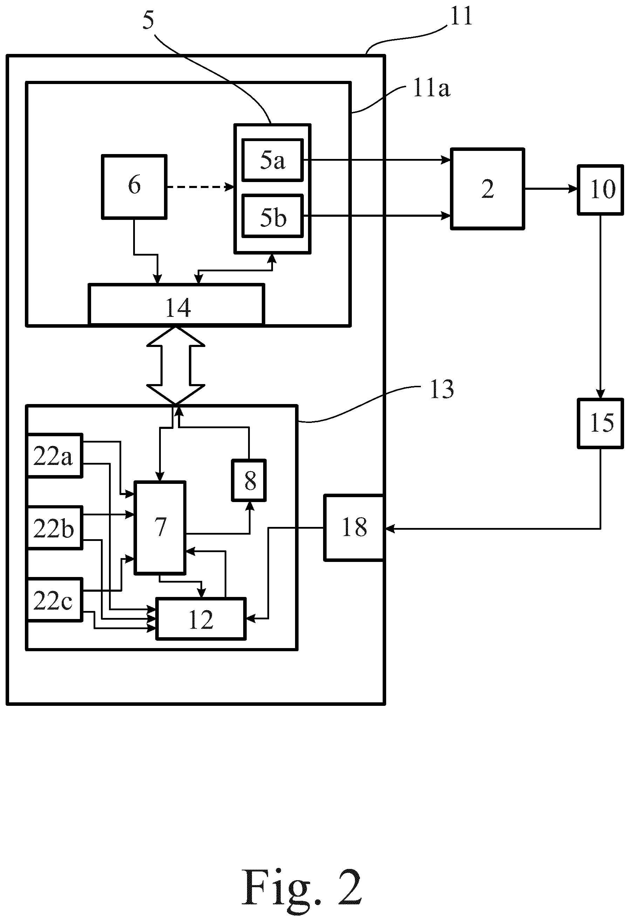

Bevorzugt ist es, dass die Soll-Positionsinformation 5 von einer NC-Steuerung 11a basierend auf der Befehlsabfolge erzeugt wird, und zwar insbesondere nach einer Interpolation und/oder einer Transformation. Bei dieser NC-Steuerung 11a kann es sich um eine eigene Vorrichtung oder - wie in der Fig. 2 dargestellt - um eine Software handeln, welche ggf. mit anderer Software auf einer Rechenvorrichtung - hier der Steuervorrichtung 11 - abläuft. Um die oben beschriebene laufende Anpassung während der Bearbeitung besonders reaktionsschnell durchführen zu können, ist es bevorzugt, dass die Soll-Positionsinformation 5 von der NC-Steuerung 11a in einem Interpolationstakt erzeugt wird und dass die Anpassung des Kompensationsparametersatzes 7 zur Verringerung der Abweichung 9 in dem Interpolationstakt erfolgt. Unter dem Begriff "Interpolationstakt" kann die Taktperiode verstanden werden, mit welcher die NC-Steuerung 11a die Interpolation vornimmt.

Besonders vorteilhaft ist es, wenn das vorschlagsgemäße Verfahren bei einer bereits bekannten NC-Steuerung 11a angewandt werden kann. Dies geht besonders dann einfach, wenn die - regelmäßig von einem Drittanbieter bezogene - NC-Steuerung 11a eine Anbindungsschnittstelle 14 für die Einbindung von eigenentwickelter Software aufweist. Daher ist es bevorzugt, dass das Verarbeiten der Soll-Positionsinformation 5 mit dem auf die Soll-Positionsinformation 5 bezogenen Kompensationsparametersatz 7 zur Ermittlung des Kompensationswertes 8 und die Anpassung des Kompensationsparametersatzes 7 zur Verringerung der Abweichung 9 in einem ablaufenden Ergänzungs-Softwaremodul 13 erfolgt, welches Ergänzungs-Softwaremodul 13 über die Anbindungsschnittstelle 14 der NC-Steuerung 11a mit dieser datentechnisch kommuniziert. Bei dieser Anbindungsschnittstelle 14 kann es sich um eine reine Programmierschnittstelle handeln.

Dieses Ergänzungs-Softwaremodul 13 kann dabei ablauftechnisch unter der Kontrolle der NC-Steuerung 11a stehen, was etwa dadurch vorgesehen werden kann, dass entsprechende Einstiegspunkte des Ergänzungs-Softwaremoduls 13 als Rückruffunktion an die NC-Steuerung 11a übergeben werden. So ist es bevorzugt, dass die Anbindungsschnittstelle 14 das Ergänzungs-Softwaremodul 13 basierend auf Ablaufereignissen der NC-Steuerung 11a datentechnisch aufruft. Es kann aber auch die NC-Steuerung 11a mittels eines anderen datentechnischen Mechanismus Vorgänge in dem Ergänzungs-Softwaremodul 13 auslösen, indem z. B. Semaphoren freigegeben werden. Umgekehrt ist ebenfalls bevorzugt vorgesehen, dass das Ergänzungs-Softwaremodul 13 über die Anbindungsschnittstelle 14 Funktionen der NC-Steuerung 11a datentechnisch aufrufen kann.

Über diese Anbindungsschnittstelle 14 kann es dem Ergänzungs-Softwaremodul 13 auch ermöglicht werden, auf die zur Ermittlung des Kompensationswertes 8 erforderlichen oder hilfreichen Informationen zuzugreifen. Vorzugsweise empfängt also das Ergänzungs-Softwaremodul 13 Zustandsinformationen des Manipulators 2, welche insbesondere die Ist-Position 10 und/oder die Soll-Positionsinformation 5 und/oder die Soll-Position 6 umfassen können, über die Anbindungsschnittstelle 14. Alternativ und wie in der Fig. 2 dargestellt kann das Ergänzungs-Softwaremodul die Ist-Position 10 auch unabhängig von der NC-Steuerung 11a und damit der Anbindungsschnittstelle 14 empfangen.

Eine optische Erfassung ist besonders dazu geeignet, die Ist-Position 10 des Arbeitspunktes 1 zuverlässig zu bestimmen. Wie in der Fig. 1 dargestellt ist es daher bevorzugt, dass während der Bearbeitung des Werkstücks 3 die Ist-Position 10 durch einen optischen Positionssensor 15 gemessen wird. Besonders geeignet ist dabei - gemäß der Darstellung in der Fig. 1 - ein Lasertracker 15a, wobei auch eine Mehrzahl an Lasertrackern 15a zur Messung der Ist-Position 10 verwendet werden können. Der Lasertracker 15a zielt dabei auf einen Reflektor 16 an dem Manipulator 2. Die Anpassung des Kompensationsparametersatzes 7 kann umso präziser vorgenommen werden, je mehr unterschiedliche Messungen durch den optischen Positionssensor 15 vorgenommen werden. Wie auch in der Fig. 1 dargestellt ist es daher bevorzugt, dass der optische Positionssensor 15 eine Messung der Ist-Position 10 an einer Vielzahl von Bearbeitungspositionen 17 an dem Werkstück 3 vornimmt, welche Bearbeitungspositionen 17 sukzessive von dem Manipulator 2 zur Bearbeitung durch den Endeffektor 4 angesteuert werden. In der Fig. 1 sind diese Bearbeitungspositionen 17 durch die entsprechende Position des Reflektors 16 an der jeweiligen Bearbeitungsposition 17 gekennzeichnet.

In so einem Fall kann der Kompensationsparametersatz 7 basierend auf dem Korrekturwert 12 von mehreren Vergleichen zwischen der gemessenen Ist-Position 10 und der Soll-Position 6 angepasst werden. Eine Referenzposition 17a für den optischen Positionssensor 15 ist hier ebenfalls an dem Werkstück 3 definiert. Bevorzugt ist weiter, dass der optische Positionssensor 15 über eine ablaufende Messsoftware 18 mit der NC-Steuerung 11a und/oder dem Ergänzungs-Softwaremodul 13 datentechnisch verbunden ist.

Schon bei der Bestimmung des Kompensationsparametersatzes 7 kann eine Unterscheidung getroffen werden zwischen einerseits denjenigen Parametern, die als typ- bzw. bauartbedingt konstant angesehen werden können und andererseits denjenigen Parametern, welche von einem Manipulator zum anderen abweichen können. Die erstgenannten Parameter können auch als unveränderliche Modellparameter angesehen werden, welche fundamental das rechnerische Modell überhaupt definieren, und die letztgenannten Parameter als solche, welche dieses Modell dann mit speziellen Werten füllen. Somit ist es bevorzugt, dass der Kompensationsparametersatz 7 einen insbesondere manipulatortypbezogenen Modellparametersatz 19 - hier den erstgenannten Parametern entsprechend - und einen physikalischen Datensatz 20 - den zweitgenannten Parametern entsprechend - umfasst. Der physikalische Datensatz 20 kann auf den Manipulator 2 bezogene Masseninformationen (also im Sinne eines Gewichts) und zusätzlich oder alternativ Massenschwerpunktinformationen umfassen. Vorzugsweise wird nur der Modellparametersatz 19 basierend auf dem Korrekturwert 12 zur Verringerung der Abweichung 9 angepasst.

Gemäß einer bevorzugten Ausführungsform dient der Kompensationsparametersatz 7 dazu, auch den Einfluss einer messbaren Umgebungsgröße auf die Ist-Position 10 des Arbeitspunktes 1 zu kompensieren. Der Kompensation wird dann also nicht nur die Soll-Positionsinformation 5 zugrundegelegt, sondern auch diese gemessene Umgebungsgröße. Dabei ist vorliegend der Begriff der "Umgebung" weit auszulegen und umfasst beliebige physische, insbesondere auch an oder in dem Manipulator auftretende und messbare Größen.

Daher ist es bevorzugt, dass während der Bearbeitung des Werkstücks 3 mindestens eine Umgebungsgröße gemessen wird und dass der Kompensationsparametersatz 7 einen auf die jeweilige gemessene Umgebungsgröße bezogenen Umgebungs-Kompensationsparameter umfasst, mit welchem Umgebungs-Kompensationsparameter die jeweilige gemessene Umgebungsgröße zur Ermittlung des Kompensationswertes 8 verarbeitet wird. Die Messung der mindestens einen Umgebungsgröße erfolgt bevorzugt durch eine Umgebungssensoranordnung, gemäß dem Beispiel der Fig. 1 mit einer Temperatursensoranordnung 21a.

Eine bevorzugte Variante sieht vor, dass die mindestens eine Umgebungsgröße einen Druck 22a umfasst. Bei diesem Druck 22a kann es sich um einen auf den Manipulator 2 und hier insbesondere auf ein Gewichtsausgleichssystem des Manipulators 2 wirkenden Druck 22a handeln.

Gemäß einer weiteren bevorzugten Variante umfasst die mindestens eine Umgebungsgröße eine Ist-Temperatur 22b. Diese Ist-Temperatur 22b kann vor allem eine Ist-Temperatur 22b an dem Manipulator 2 sein. Diese gemessene Ist-Temperatur 22b kann dabei sowohl auf eine Erwärmung aus der Umgebung als auch auf eine Erwärmung aus dem Betrieb des Manipulators 2 zurückgehen. Bevorzugt wird also die Ist-Temperatur 22b durch eine Umgebungs-Wärme und durch eine Eigenerwärmung des Manipulators 2 beeinflusst.

Eine bevorzugte Ausführungsform sieht hier vor, dass der Umgebungs-Kompensationsparameter einen materialabhängigen Temperaturausdehnungskoeffizienten und/oder einen insbesondere achsbezogenen Temperatur-Biegekoeffizienten und/oder einen insbesondere achsbezogenen Längenparameter umfasst. Weiter ist es bevorzugt, dass der Umgebungs-Kompensationsparameter auf die gemessene Ist-Temperatur 22b bezogen ist.

So kann der obige Längenparameter eine - gemessene, geschätzte oder berechnete - Längenangabe umfassen, welche sich insbesondere auf einen Abstand zwischen zwei Achsen des Manipulators 2 beziehen kann. Bei dem Temperaturausdehnungskoeffizienten kann es sich um einen Ausdehnungskoeffizienten handeln, der auf ein Material des Manipulators 2 bezogen ist. Auch der Temperatur-Biegekoeffizient kann sich auf eine Verbiegung der Strecke zwischen zwei Achsen beziehen, analog zu dem obigen Längenparameter. Der Umgebungs-Kompensationsparameter kann auch eine Gewichtung dieser einzelnen Parameter und Koeffizienten umfassen.

Eine weitere bevorzugte Variante sieht vor, dass die mindestens eine Umgebungsgröße eine auf den Manipulator 2 und/oder auf den Endeffektor 4 wirkende Prozesskraft 22c umfasst. Unter einer solchen Prozesskraft 22c ist eine von dem Endeffektor 4 insbesondere auf das Werkstück 3 während der Bearbeitung ausgeübte Kraft zu verstehen, welche Kraft dann entsprechend auch von dem Manipulator 2 aufgenommen wird und dort z. B. zu Verbiegungen führen kann.

Bei dem Manipulator 2 handelt es sich bevorzugt - und wie in der Fig. 1 dargestellt - um einen Mehrachsroboter 23. Entsprechend ist es bevorzugt, dass die Soll-Positionsinformation 5 eine Achsinformation 5a des Mehrachsroboters 23 umfasst. Unter einer solchen Achsinfonnation 5a ist also eine Information zu verstehen, weiche sich auf eine oder mehrere Achsen des Mehrachsroboters 23 bezieht. Es kann sich insbesondere um eine Information zu einer Soll-Stellung einer Achse des Mehrachsroboters 23 handeln. Speziell kann die Achsinformation 5a eine Soll-Information einer horizontalen Hauptachse des Mehrachsroboters 23 umfassen. Die Achsinformation 5a kann auch eine Soll-Stellung aller Achsen des Mehrachsroboters 23 vorgeben, sodass insoweit die Soll-Position 6 auch eindeutig durch eine solche Achsinformation 5a definiert sei kann. Vorzugsweise gibt die Achsinformation 5a die Soll-Position 6 in den Gelenkkoordinaten des Mehrachsroboters 23 an.

Weiter ist es bevorzugt vorgesehen, dass der Kompensationsparametersatz 7 einen auf die Achsinformation 5a bezogenen Achs-Kompensationsparameter umfasst, mit dem die Achsinformation 5a zur Ermittlung des Korrekturwertes 12 verarbeitet wird. Mit anderen Worten hängt der Korrekturwert 12 von der Achsinformation 5a ab. Hier kann es insbesondere sein, dass durch einen auf den Achs-Kompensationsparameter zurückgehenden Anteil des Korrekturwertes 12 die Achsinformation 5a und vorzugsweise nur die Achsinformation 5a angepasst wird. Insoweit kann mit dem Achs-Kompensationsparameter die Achsinformation 5a und speziell die obige Soll-Information der horizontalen Hauptachse des Mehrachsroboters 23 gezielt kompensiert werden, sodass die Komplexität der Berechnungen für den Ausgleich der Abweichung 9 insgesamt reduziert wird.

Gemäß einer bevorzugten Ausfuhrungsform umfasst die Soll-Positionsinformation 5 eine kartesische Koordinateninformation 5b. Es kann sich dabei um eine Positionsangabe in kartesischen Koordinaten handeln, die der Soll-Position 6 entspricht. Hier ist weiter vorzugsweise vorgesehen, dass die Achsinformation 5a basierend auf der kartesischen Koordinateninformation 5b erzeugt wurde. Dieser Vorgang wird auch als Rückwärtstransfonnation bezeichnet, wobei die Transformation von den Gelenkkoordinaten zu den kartesischen Koordinaten als Vorwärtstransformation bezeichnet wird. Es ist bevorzugt vorgesehen, dass der Kompensationsparametersatz 7 einen auf die kartesische Koordinateninformation 5b bezogenen Absolut-Kompensationsparameter umfasst, mit dem die kartesische Koordinateninformation 5b zur Ermittlung des Korrekturwertes 12 verarbeitet wird. Auf diese Weise kann also ein Mechanismus zur Kompensation der Abweichung bereitgestellt werden, welcher zumindest auch direkt die kartesischen Koordinaten der Soll-Position 6 bzw. einen entsprechenden Teil der Soll-Positionsinformation 5 berücksichtigt. Dies kann ggf. eine Reduzierung des Rechenaufwands bzw. der Komplexität gegenüber einer etwa ausschließlichen Berücksichtigung der Gelenkkoordinaten im Sinne der Achsinformation 5a bedeuten.

## Patentansprüche

1. Verfahren zur Kompensation einer Abweichung eines Arbeitspunkts (1) eines Manipulators (2) während der Bearbeitung eines Werkstücks (3) durch einen Endeffektor (4) an dem Manipulator (2), wobei eine Befehlsabfolge zur Ansteuerung des Manipulators (2) zwecks Bearbeitung des Werkstücks (3) abgearbeitet wird und basierend auf der Befehlsabfolge eine Soll-Positionsinformation (5) entsprechend einer Soll-Position (6) erzeugt wird, auf welcher Soll-Positionsinformation (5) basierend der Arbeitspunkt (1) des Manipulators (2) eingestellt wird, wobei die Soll-Positionsinformation (5) mit einem auf die Soll-Positionsinformation (5) bezogenen Kompensationsparametersatz (7) zur Ermittlung eines Kompensationswertes (8) verarbeitet wird und die Soll-Positionsinformation (5) gemäß dem Kompensationswert (8) zum Ausgleich einer Abweichung (9) zwischen einer Ist-Position (10) des Arbeitspunkts (1) und der Soll-Position (6) angepasst wird,
**dadurch gekennzeichnet,**
**dass** die Ist-Position (10) während der Bearbeitung des Werkstücks (3) gemessen wird, dass basierend auf einem Vergleich zwischen der gemessenen Ist-Position (10) und der Soll-Position (6) ein Korrekturwert (12) ermittelt wird und dass basierend auf dem Korrekturwert (12) während der Bearbeitung des Werkstücks (3) der Kompensationsparametersatz (7) zur Verringerung der Abweichung (9) angepasst wird.

2. Verfahren nach Anspruch 1, **dadurch gekennzeichnet, dass** die Soll-Positionsinformation (5) von einer NC-Steuerung (11a), insbesondere nach einer Interpolation und/oder einer Transformation, basierend auf der Befehlsabfolge erzeugt wird, vorzugsweise, dass die Soll-Positionsinformation (5) von der NC-Steuerung (11a) in einem Interpolationstakt erzeugt wird und dass die Anpassung des Kompensationsparametersatzes (7) zur Verringerung der Abweichung (9) in dem Intemolationstakt erfolgt, wobei die NC-Steuerung eine Steuerung ist, welche einige oder alle Funktionalitäten einer speicherprogrammierbaren Steuerung, SPS, umfasst.

3. Verfahren nach Anspruch 2, **dadurch gekennzeichnet, dass** das Verarbeiten der Soll-Positionsinformation (5) mit dem auf die Soll-Positionsinformation (5) bezogenen Kompensationsparametersatz (7) zur Ermittlung eines Kompensationswertes (8) und die Anpassung des Kompensationsparametersatzes (7) zur Verringerung der Abweichung (9) in einem ablaufenden Ergänzungs-Softwaremodul (13) erfolgt, welches Ergänzungs-Softwaremodul (13) über eine Anbindungsschnittstelle (14) der NC-Steuerung (11a) mit dieser datentechnisch kommuniziert.

4. Verfahren nach Anspruch 3, **dadurch gekennzeichnet, dass** die Anbindungsschnittstelle (14) das Ergänzungs-Softwaremodul (13) basierend auf Ablaufereignissen der NC-Steuerung (11a) datentechnisch aufruft.

5. Verfahren nach Anspruch 3 oder 4, **dadurch gekennzeichnet, dass** das Ergänzungs-Softwaremodul (13) Zustandsinformationen des Manipulators (2), insbesondere umfassend die Ist-Position (10) und/oder die Soll-Positionsinformation (5) und/oder die Soll-Position (6), über die Anbindungsschnittstelle (14) empfängt.

6. Verfahren nach einem der Ansprüche 2 bis 5, **dadurch gekennzeichnet, dass** während der Bearbeitung des Werkstücks (3) die Ist-Position (10) durch einen optischen Positionssensor (15), insbesondere einen Lasertracker (15a) gemessen wird, vorzugsweise, dass der optische Positionssensor (15) über eine ablaufende Messsoftware (18) mit der NC-Steuerung (11a) und/oder dem Ergänzungs-Softwaremodul (13) datentechnisch verbunden ist.

7. Verfahren nach einem der Ansprüche 1 bis 6, **dadurch gekennzeichnet, dass** der Kompensationsparametersatz (7) einen insbesondere manipulatortypbezogenen Modellparametersatz (19) und einen physikalischen Datensatz (20), vorzugsweise umfassend auf den Manipulator (2) bezogene Masseninfonnationen und/oder Massenschwerpunktinformationen, umfasst und dass weiter insbesondere nur der Modellparametersatz (19) basierend auf dem Korrekturwert (12) zur Verringerung der Abweichung (9) angepasst wird.

8. Verfahren nach einem der Ansprüche 1 bis 7, **dadurch gekennzeichnet, dass** während der Bearbeitung des Werkstücks (3) mindestens eine Umgebungsgröße gemessen und dass der Kompensationsparametersatz (7) einen auf die jeweilige gemessene Umgebungsgröße bezogenen Umgebungs-Kompensationsparameter umfasst, mit welchem Umgebungs-Kompensationsparameter die jeweilige gemessene Umgebungsgröße zur Ermittlung des Kompensationswertes (8) verarbeitet wird.

9. Verfahren nach Anspruch 8, **dadurch gekennzeichnet, dass** die mindestens eine Umgebungsgröße einen Druck (22a), vorzugsweise, einen auf den Manipulator (2) wirkenden, insbesondere auf ein Gewichtsausgleichssystem des Manipulators (2) wirkenden, Druck (22a) umfasst.

10. Verfahren nach Anspruch 8 oder 9, **dadurch gekennzeichnet, dass** die mindestens eine Umgebungsgröße eine Ist-Temperatur (22b), vorzugsweise, eine Ist-Temperatur (22b) an dem Manipulator (2), umfasst, insbesondere, dass die Ist-Temperatur (22b) durch eine Umgebungs-Wärme und durch eine Eigenerwärmung des Manipulators (2) beeinflusst wird.

11. Verfahren nach Anspruch 10, **dadurch gekennzeichnet, dass** der Umgebungs-Kompensationsparameter einen materialabhängigen Temperaturausdehnungskoeffizienten und/oder einen insbesondere achsbezogenen Temperatur-Biegekoeffizienten und/oder einen insbesondere achsbezogenen Längenparameter umfasst, vorzugsweise, welcher Umgebungs-Kompensationsparameter auf die gemessene Ist-Temperatur (22b) bezogen ist.

12. Verfahren nach einem der Ansprüche 1 bis 11, **dadurch gekennzeichnet, dass** die mindestens eine Umgebungsgröße einen auf den Manipulator (2) und/oder auf den Endeffektor (4) wirkende Prozesskraft (22c) umfasst.

13. Verfahren nach einem der Ansprüche 1 bis 12, **dadurch gekennzeichnet, dass** der Manipulator (2) ein Mehrachsroboter (23) ist, vorzugsweise, dass die Soll-Positionsinformation (5) eine Achsinformation (5a) des Mehrachsroboters (23) umfasst, insbesondere, dass die Achsinformation (5a) eine Soll-Information einer horizontalen Hauptachse umfasst.

14. Verfahren nach Anspruch 13, **dadurch gekennzeichnet, dass** der Kompensationsparametersatz (7) einen auf die Achsinformation (5a) bezogenen Achs-Kompensationsparameter umfasst, mit dem die Achsinformation (5a) zur Ermittlung des Korrekturwertes (12) verarbeitet wird, vorzugsweise, dass durch einen auf den Achs-Kompensationsparameter zurückgehenden Anteil des Korrekturwertes (12), insbesondere nur, die Achsinformation (5a) angepasst wird.

15. Verfahren nach einem der Ansprüche 1 bis 14, **dadurch gekennzeichnet, dass** die Soll-Positionsinformation (5) eine kartesische Koordinateninformation (5b) umfasst, vorzugsweise, dass die Achsinformation (5a) basierend auf der kartesischen Koordinateninformation (5b) erzeugt wurde, insbesondere, dass der Kompensationsparametersatz (7) einen auf die kartesische Koordinateninformation (5b) bezogenen Absolut-Kompensationsparameter umfasst, mit dem die kartesische Koordinateninformation (5b) zur Ermittlung des Korrekturwertes (12) verarbeitet wird.

## Claims

1. Method for compensating for a discrepancy of an operating point (1) of a manipulator (2) during the machining of a workpiece (3) by an end effector (4) on the manipulator (2), wherein an instruction sequence for controlling the manipulator (2) for the purpose of machining the workpiece (3) is executed and an item of target position information (5) corresponding to a target position (6) is generated on the basis of the instruction sequence, on the basis of which target position information (5) the operating point (1) of the manipulator (2) is adjusted, wherein the target position information (5) is processed using a compensation parameter set (7) based on the target position information (5) in order to determine a compensation value (8), and the target position information (5) is adapted according to the compensation value (8) in order to compensate for a discrepancy (9) between an actual position (10) of the operating point (1) and the target position (6),
**characterized**
**in that** the actual position (10) is measured during the machining of the workpiece (3), in that a correction value (12) is determined on the basis of a comparison between the measured actual position (10) and the target position (6), and in that the compensation parameter set (7) is adapted on the basis of the correction value (12) during the machining of the workpiece (3) in order to reduce the discrepancy (9).

2. Method according to Claim 1, **characterized in that** the target position information (5) is generated by an NC controller (11a), in particular following an interpolation and/or a transformation, on the basis of the instruction sequence, preferably **in that** the target position information (5) is generated by the NC controller (11a) in an interpolation cycle, and **in that** the adaptation of the compensation parameter set (7) in order to reduce the discrepancy (9) is carried out in the interpolation cycle, wherein the NC controller is a controller which comprises some or all functionalities of a programmable logic controller, PLC.

3. Method according to Claim 2, **characterized in that** the processing of the target position information (5) using the compensation parameter set (7) based on the target position information (5) in order to determine a compensation value (8) and the adaptation of the compensation parameter set (7) in order to reduce the discrepancy (9) are carried out in a running supplementary software module (13), which supplementary software module (13) communicates, via a connection interface (14) of the NC controller (11a), with the latter using data technology.

4. Method according to Claim 3, **characterized in that** the connection interface (14) calls the supplementary software module (13) using data technology on the basis of run events of the NC controller (11a).

5. Method according to Claim 3 or 4, **characterized in that** the supplementary software module (13) receives state information relating to the manipulator (2), in particular comprising the actual position (10) and/or the target position information (5) and/or the target position (6), via the connection interface (14).

6. Method according to one of Claims 2 to 5, **characterized in that** the actual position (10) is measured by an optical position sensor (15), in particular a laser tracker (15a), during the machining of the workpiece (3), preferably **in that** the optical position sensor (15) is connected to the NC controller (11a) and/or the supplementary software module (13) using data technology via running measurement software (18).

7. Method according to one of Claims 1 to 6, **characterized in that** the compensation parameter set (7) comprises an in particular manipulator-type-based model parameter set (19) and a physical data set (20), preferably comprising mass information and/or mass centre of gravity information based on the manipulator (2), and **in that** furthermore in particular only the model parameter set (19) is adapted on the basis of the correction value (12) in order to reduce the discrepancy (9) .

8. Method according to one of Claims 1 to 7, **characterized in that** at least one environmental variable is measured during the machining of the workpiece (3), and **in that** the compensation parameter set (7) comprises an environmental compensation parameter which is based on the respective measured environmental variable and is used to process the respective measured environmental variable in order to determine the compensation value (8) .

9. Method according to Claim 8, **characterized in that** the at least one environmental variable comprises a pressure (22a), preferably a pressure (22a) acting on the manipulator (2), in particular acting on a weight balancing system of the manipulator (2).

10. Method according to Claim 8 or 9, **characterized in that** the at least one environmental variable comprises an actual temperature (22b), preferably an actual temperature (22b) at the manipulator (2), in particular in that the actual temperature (22b) is influenced by ambient heat and by self-heating of the manipulator (2).

11. Method according to Claim 10, **characterized in that** the environmental compensation parameter comprises a material-dependent coefficient of thermal expansion and/or an in particular axis-based thermal bending coefficient and/or an in particular axis-based length parameter, said environmental compensation parameter preferably being based on the measured actual temperature (22b) .

12. Method according to one of Claims 1 to 11, **characterized in that** the at least one environmental variable comprises a process force (22c) acting on the manipulator (2) and/or on the end effector (4).

13. Method according to one of Claims 1 to 12, **characterized in that** the manipulator (2) is a multi-axis robot (23), preferably **in that** the target position information (5) comprises an item of axis information (5a) relating to the multi-axis robot (23), in particular in that the axis information (5a) comprises an item of target information relating to a horizontal main axis.

14. Method according to Claim 13, **characterized in that** the compensation parameter set (7) comprises an axis compensation parameter which is based on the axis information (5a) and is used to process the axis information (5a) in order to determine the correction value (12), preferably **in that** in particular only the axis information (5a) is adapted by means of a portion of the correction value (12) tracing back to the axis compensation parameter.

15. Method according to one of Claims 1 to 14, **characterized in that** the target position information (5) comprises an item of Cartesian coordinate information (5b), preferably **in that** the axis information (5a) was generated on the basis of the Cartesian coordinate information (5b), in particular **in that** the compensation parameter set (7) comprises an absolute compensation parameter which is based on the Cartesian coordinate information (5b) and is used to process the Cartesian coordinate information (5b) in order to determine the correction value (12).

## Revendications

1. Procédé de compensation d'un écart d'un point de fonctionnement (1) d'un manipulateur (2) pendant l'usinage d'une pièce à travailler (3) par un effecteur terminal (4) sur le manipulateur (2), dans lequel une séquence d'instructions pour piloter le manipulateur (2) en vue de l'usinage de la pièce à travailler (3) est exécutée, et sur la base de la séquence d'instructions, une information de position théorique (5) est générée selon une position théorique (6), le point de fonctionnement (1) du manipulateur (2) étant réglé sur la base de cette information de position théorique (5), l'information de position théorique (5) étant traitée avec un jeu de paramètres de compensation (7) lié à l'information de position théorique (5) afin de déterminer une valeur de compensation (8), et l'information de position théorique (5) est adaptée selon la valeur de compensation (8) afin de compenser un écart (9) entre une position réelle (10) du point de fonctionnement (1) et la position théorique (6), **caractérisé en ce que** la position réelle (10) est mesurée pendant l'usinage de la pièce à travailler (3), **en ce que** sur la base d'une comparaison entre la position réelle (10) mesurée et la position théorique (6), une valeur de correction (12) est déterminée, et **en ce que** sur la base de la valeur de correction (12), le jeu de paramètres de compensation (7) est adapté pendant l'usinage de la pièce à travailler (3) afin de diminuer l'écart (9).

2. Procédé selon la revendication 1, **caractérisé en ce que** l'information de position théorique (5) est générée par une commande numérique (11a), en particulier après une interpolation et/ou une transformation, sur la base de la séquence d'instructions, de préférence **en ce que** l'information de position théorique (5) est générée par la commande numérique (11a) dans un cycle d'interpolation, et **en ce que** l'adaptation du jeu de paramètres de compensation (7) pour diminuer l'écart (9) est effectuée dans le cycle d'interpolation, la commande numérique étant une commande qui comprend quelques unes ou toutes les fonctionnalités d'un automate programmable, PLC.

3. Procédé selon la revendication 2, **caractérisé en ce que** le traitement de l'information de position théorique (5) avec le jeu de paramètres de compensation (7) lié à l'information de position théorique (5) pour déterminer une valeur de compensation (8) et l'adaptation du jeu de paramètres de compensation (7) pour diminuer l'écart (9) sont effectués dans un module logiciel auxiliaire (13) en cours d'exécution, lequel module logiciel auxiliaire (13) communique pour la transmission de données avec la commande numérique (11a) par une interface de liaison (14) de celle-ci.

4. Procédé selon la revendication 3, **caractérisé en ce que** l'interface de liaison (14) invoque le module logiciel auxiliaire (13) pour la transmission de données sur la base d'évènements d'exécution de la commande numérique (11a).

5. Procédé selon la revendication 3 ou 4, **caractérisé en ce que** le module logiciel auxiliaire (13) reçoit des informations d'état du manipulateur (2), comprenant en particulier la position réelle (10) et/ou l'information de position théorique (5) et/ou la position théorique (6), par l'interface de liaison (14).

6. Procédé selon l'une quelconque des revendications 2 à 5, **caractérisé en ce que** pendant l'usinage de la pièce à travailler (3), la position réelle (10) est mesurée par un capteur de position optique (15), en particulier un laser de poursuite (15a), de préférence en ce que le capteur de position optique (15) est relié pour la transmission de données à la commande numérique (11a) et/ou au module logiciel auxiliaire (13) par l'intermédiaire d'un logiciel de mesure (18) en cours d'exécution.

7. Procédé selon l'une quelconque des revendications 1 à 6, **caractérisé en ce que** le jeu de paramètres de compensation (7) comprend un jeu de paramètres de modèle (19), en particulier lié au type de manipulateur, et un enregistrement de données physiques (20), comprenant de préférence des informations de masse et/ou des informations de centre de masse liées au manipulateur (2), et **en ce qu'**en outre en particulier seul le jeu de paramètres de modèle (19) est adapté sur la base de la valeur de correction (12) afin de diminuer l'écart (9).

8. Procédé selon l'une quelconque des revendications 1 à 7, **caractérisé en ce que** pendant l'usinage de la pièce à travailler (3), au moins une grandeur d'environnement est mesurée, et **en ce que** le jeu de paramètres de compensation (7) comprend paramètre de compensation d'environnement lié à la grandeur d'environnement respective mesurée, paramètre de compensation d'environnement avec lequel la grandeur d'environnement respective mesurée est traitée pour déterminer la valeur de compensation (8).

9. Procédé selon la revendication 8, **caractérisé en ce que** ladite au moins une grandeur d'environnement comprend une pression (22a), de préférence une pression (22a) agissant sur le manipulateur (2), en particulier agissant sur un système d'équilibrage de poids du manipulateur (2).

10. Procédé selon la revendication 8 ou 9, **caractérisé en ce que** ladite au moins une grandeur d'environnement comprend une température réelle (22b), de préférence une température réelle (22b) au niveau du manipulateur (2), en particulier **en ce que** la température réelle (22b) est influencée par une chaleur ambiante et par un auto-échauffement du manipulateur (2).

11. Procédé selon la revendication 10, **caractérisé en ce que** le paramètre de compensation d'environnement comprend un coefficient de dilatation lié à la température en fonction du matériau et/ou un coefficient de courbure lié à la température en particulier lié à l'axe et/ou un paramètre de longueur en particulier lié à l'axe, lequel paramètre de compensation d'environnement étant de préférence lié à la température réelle (22b) mesurée.

12. Procédé selon l'une quelconque des revendications 1 à 11, **caractérisé en ce que** ladite au moins une grandeur d'environnement comprend une force de processus (22c) agissant sur le manipulateur (2) et/ou sur l'effecteur terminal (4).

13. Procédé selon l'une quelconque des revendications 1 à 12, **caractérisé en ce que** le manipulateur (2) est un robot multiaxial (23), de préférence **en ce que** l'information de position théorique (5) comprend une information d'axe (5a) du robot multiaxial (23), en particulier **en ce que** l'information d'axe (5a) comprend une information théorique d'un axe principal horizontal.

14. Procédé selon la revendication 13, **caractérisé en ce que** le jeu de paramètres de compensation (7) comprend un paramètre de compensation d'axe lié à l'information d'axe (5a) avec lequel l'information d'axe (5a) est traitée pour déterminer la valeur de correction (12), de préférence **en ce que** l'information d'axe (5a), en particulier uniquement celle-ci, est adaptée selon une part de la valeur de correction (12) due au paramètre de compensation d'axe.

15. Procédé selon l'une quelconque des revendications 1 à 14, **caractérisé en ce que** l'information de position théorique (5) comprend une information de coordonnées cartésiennes (5b), de préférence **en ce que** l'information d'axe (5a) a été générée sur la base des informations de coordonnées cartésiennes (5b), en particulier **en ce que** le jeu de paramètres de compensation (7) comprend un paramètre de compensation absolu lié à l'information de coordonnées cartésiennes (5b) avec lequel l'information de coordonnées cartésiennes (5b) est traitée pour déterminer la valeur de correction (12).
